# EUROPEAN PATENT SPECIFICATION

(11) **EP 3 578 777 B1**
(45) Date of publication and mention of the grant of the patent: **05.05.2021**
(21) Application number: 18775802.4
(22) Date of filing: 07.02.2018
(51) Int. Cl.: F02B 67/06, F02B 77/00, F02B 77/14

(54) **ACCESSORY MOUNTING STRUCTURE FOR ENGINE**
ZUBEHÖRMONTAGESTRUKTUR FÜR MOTOR
STRUCTURE DE MONTAGE D'ACCESSOIRE POUR MOTEUR

(30) Priority: 30.03.2017 JP 2017067155
(43) Date of publication of application: 11.12.2019
(73) Proprietor: Mazda Motor Corporation, Aki-gun, Hiroshima 730-8670 (JP)
(72) Inventor: MATSUURA, Hirokazu, Aki-gun Hiroshima 730-8670 (JP); TERAMOTO, Takayoshi, Aki-gun Hiroshima 730-8670 (JP); MATSUOKA, Kazuhiro, Aki-gun Hiroshima 730-8670 (JP)
(74) Representative: Müller-Boré & Partner Patentanwälte PartG mbB
(86) International application number: PCT/JP2018/004205
(87) International publication number: WO 2018/179876

(56) References cited:
- JP-A- H0 460 119
- JP-A- H0 494 425
- JP-A- H0 539 730
- JP-A- H01 164 834
- JP-A- H07 127 478
- JP-A- H09 119 318
- JP-A- H09 119 318
- JP-A- 2003 227 346
- JP-A- 2004 239 155
- JP-A- 2005 344 542
- JP-U- H0 442 226
- US-A- 5 203 293
- US-A- 5 938 169

## Description

### Technical Field

The invention relates to an accessory mounting structure for an engine that allows an accessory to be mounted on the engine.

### Background Art

As an accessory mounting structure for an engine that allows an accessory to be mounted on the engine, an accessory mounting structure for an engine disclosed in Patent Literature 1 and 2 is known, for example.

According to the accessory mounting structure for the engine disclosed in Patent Literature 1, an engine accessory is mounted on a side portion of a cylinder block of the engine via a mounting bracket. In the mounting bracket, a supporting portion that protrudes in a direction separating from the side portion of the engine is arranged on the upper portion and the lower portion, and the engine accessory is fixed to the supporting portion by fastening bolts.

Minute up-down vibration in the up-down direction of the engine is likely to be generated on the engine accessory due to deflection displacement of the supporting portion of the mounting bracket. The engine accessory is designed so that the minute up-down vibration is generated in tune with the resonance frequency of the vibration of the engine and is generated in the opposite phase to the vibration of the engine by adjusting the shape and dimension of the mounting bracket, that is, the rigidity of each portion in accordance with the weight of the engine accessory. As a result, the vibration of the engine in the up-down direction is attenuated by the minute up-down vibration of the engine accessory, and the vibration of the engine in the up-down direction is reduced.

Now, for example, when a chain cover is included on the transmission side of the engine, the engine and the transmission are fastened to each other via the chain cover, and hence the fastening rigidity between the engine and the transmission decreases. In particular, when the chain cover is long in the up-down direction, the vibration of the engine in the front-rear direction increases.

However, in the accessory mounting structure for the engine in Patent Literature 1 described above, the vibration of the engine in the up-down direction can be reduced, but the engine vibration of the engine in the front-rear direction, that is, the direction orthogonal to the direction in which a crankshaft of the engine extends on the horizontal plane cannot be reduced. Thus, the engine vibration can be conceived to be reduced by reinforcement, but there is a problem in that the weight and the cost increase.

### Citation List

### Patent Literature

Patent Literature 1: Japanese Utility Model Laid Open No. 04-42226
Patent Literature 2: US 5 203 293 A

### Summary of Invention

An object of the invention is to provide an engine with an accessory mounting structure capable of reducing the engine vibration in the direction orthogonal to the direction in which a crankshaft of the engine extends on the horizontal plane without causing an increase in the weight and the cost.

An accessory mounting structure for an engine according to one aspect of the invention includes a crankshaft that extends in a first direction. The engine supports an accessory via a bracket. The bracket includes: a first portion connected to the engine; and a second portion connected to the accessory and having a lower rigidity than the first portion. The second portion functions as a dynamic damper that attenuates vibration of the engine by vibrating in an opposite phase to the vibration of the engine and in the first direction when the engine vibrates in a second direction orthogonal to the first direction on a horizontal plane.

The accessory mounting structure for the engine according to the invention can attenuate the vibration of the engine in the direction orthogonal to the direction in which the crankshaft of the engine extends on the horizontal plane without causing the increase in the weight and the cost.

The object, the features, and the advantage of the invention become clearer by the detailed description below and the accompanying drawings.

### Brief Description of Drawings

[Figure 1] Figure 1 is a perspective view of an engine/transmission unit including an accessory mounting structure for an engine according to an embodiment of the invention.
[Figure 2] Figure 2 is another perspective view of the engine/transmission unit including the accessory mounting structure for the engine according to the embodiment of the invention.
[Figure 3] Figure 3 is another partially enlarged perspective view of the vicinity of an accessory bracket of the engine/transmission unit including the accessory mounting structure for the engine according to the embodiment of the invention.
[Figure 4] Figure 4 is a partially enlarged front view of the vicinity of the accessory bracket of the engine/transmission unit including the accessory mounting structure for the engine according to the embodiment of the invention.
[Figure 5] Figure 5 is a cross-sectional view taken along line A-A in Figure 4.
[Figure 6] Figure 6 is a cross-sectional view taken along line B-B in Figure 4.
[Figure 7] Figure 7 is a cross-sectional view taken along line C-C in Figure 4.
[Figure 8] Figure 8 is another partially enlarged perspective view of the vicinity of the accessory bracket of the engine/transmission unit including the accessory mounting structure for the engine according to the embodiment of the invention.
[Figure 9] Figure 9 is a perspective view of the accessory bracket of the accessory mounting structure for the engine according to the embodiment of the invention.
[Figure 10] Figure 10 is a right side view of the accessory bracket of the accessory mounting structure for the engine according to the embodiment of the invention.
[Figure 11] Figure 11 is a front view of the accessory bracket of the accessory mounting structure for the engine according to the embodiment of the invention.
[Figure 12] Figure 12 is a plan view of the engine/transmission unit including the accessory mounting structure for the engine according to the embodiment of the invention.

### Description of Embodiment

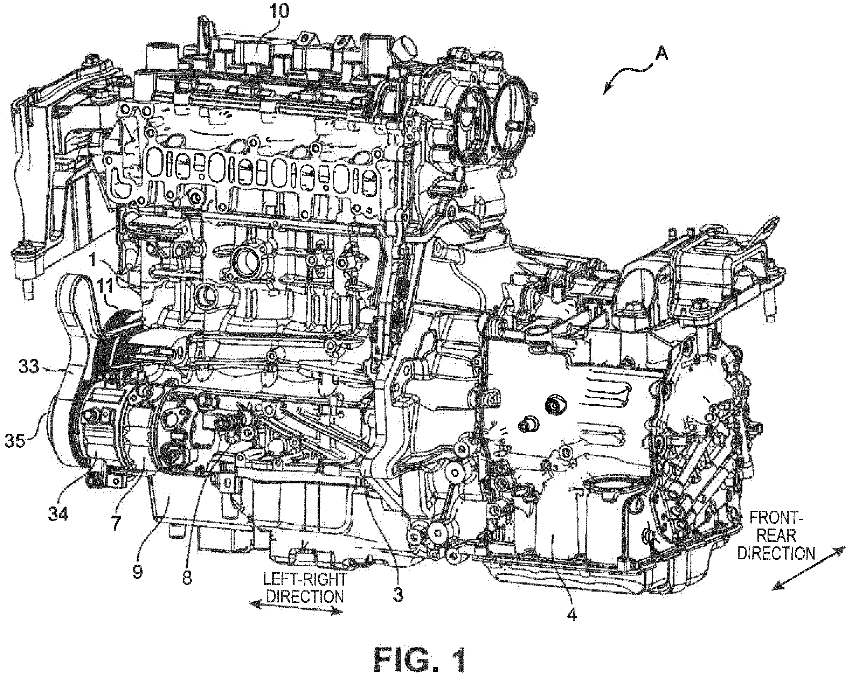

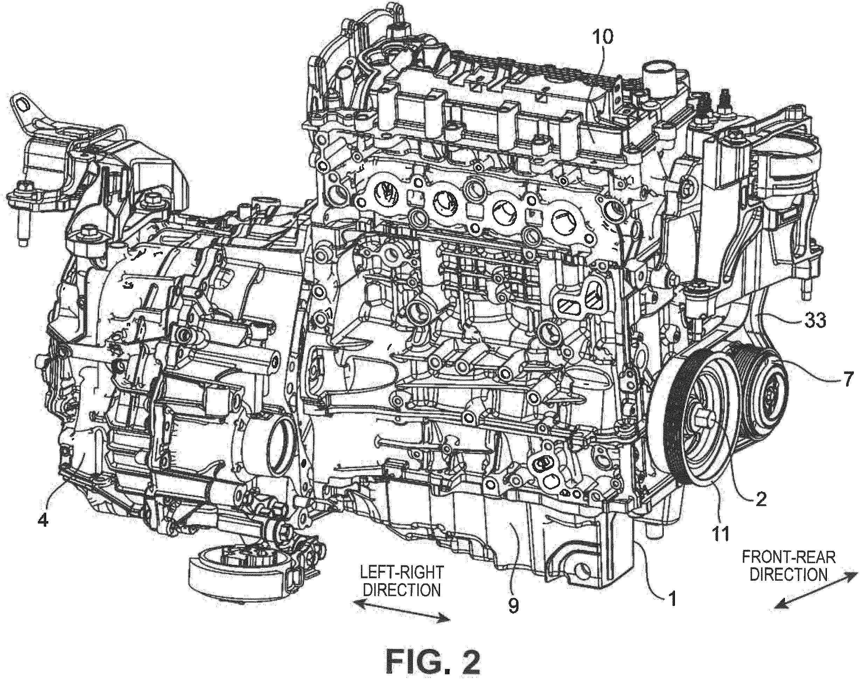

Figure 1 is a perspective view of an engine/transmission unit A including an exemplary accessory mounting structure for an engine. Figure 2 is another perspective view of the engine/transmission unit A including the exemplary accessory mounting structure for the engine. The engine/transmission unit A is described below with reference to Figures 1 and 2. Note that, in Figures 1 to 11 below, the direction of the upper side with respect to the surface of the paper is referred to as "above" or "upward", the direction of the lower side with respect to the surface of the paper is referred to as "below" or "downward", and the direction of the collective term for "above" or "upward" and "below" or "downward" is referred to as the up-down direction. The direction of the left side with respect to the surface of the paper is referred to as "left", the direction of the right side with respect to the surface of the paper is referred to as "right", and the direction of the collective term for "left" and "right" is referred to as the left-right direction. The direction orthogonal to the up-down direction and the left-right direction is referred to as the front-rear direction, the direction heading the near side in the front-rear direction is referred to as "front", and the direction heading the far side in the front-rear direction is referred to as "rear".

As illustrated in Figures 1 and 2, the engine/transmission unit A includes a rectangular parallelepiped engine 1 that is long in the up-down direction, a substantially rectangular chain cover 3 that is long in the up-down direction and covers a chain (not shown) that causes a crankshaft 2 and a cam (not shown) included in the engine 1 to operate together, and a rectangular parallelepiped transmission 4 that is long in the left-right direction and mounted on the engine 1 via the chain cover 3.

The engine 1 includes a cylinder block 9 in which a cylinder (not shown) in which a piston (not shown) slides is formed, a cylinder head 10 that is mounted on the upper portion of the cylinder block 9 and has an intake port (not shown) and an exhaust port (not shown) formed therein, a crankshaft pulley 11 that is disposed on a side surface of the cylinder block 9 on a side opposite to a side surface on which the transmission 4 is disposed, and rotates together with the crankshaft 2 that extends in a first direction (the left-right direction in Figures 1 and 2), a driving belt 33 bridged over the crankshaft pulley 11, an accessory 7 over which the driving belt 33 is bridged, and the accessory mounting structure for the engine for connecting the accessory 7 to the cylinder block 9. The crankshaft pulley 11 is exemplified as a rotating member. Note that the rotating member may be other rotating members such as a sprocket.

The chain cover 3 is mounted on the right side surface portion of the cylinder head 10 and the cylinder block 9. The chain cover 3 is formed in a size that reaches the upper end of the right side surface portion of the engine 1 from the lower end thereof, and covers the entire right side surface portion of the engine 1.

The transmission 4 is for converting the rotary motion of the crankshaft 2 to a rotation speed suitable for traveling and is for transmitting the rotation speed to driving wheels (not shown), and can be an automatic transmission or a manual transmission, for example, but is not limited thereto. The transmission 4 may be any type as long as the transmission is for converting the rotary motion of the crankshaft 2 to the rotation speed suitable for traveling and is for transmitting the rotation speed to the driving wheels (not shown).

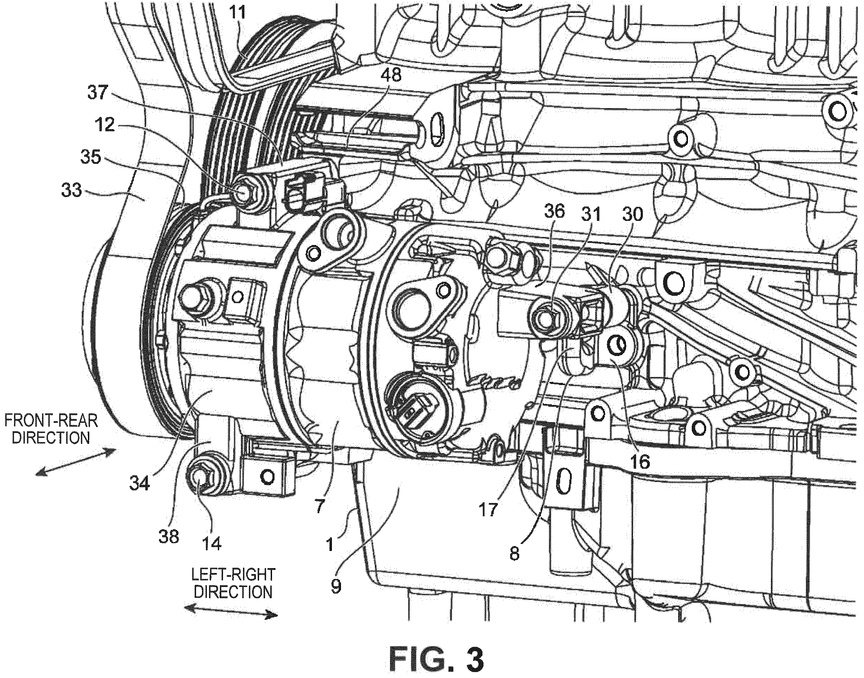

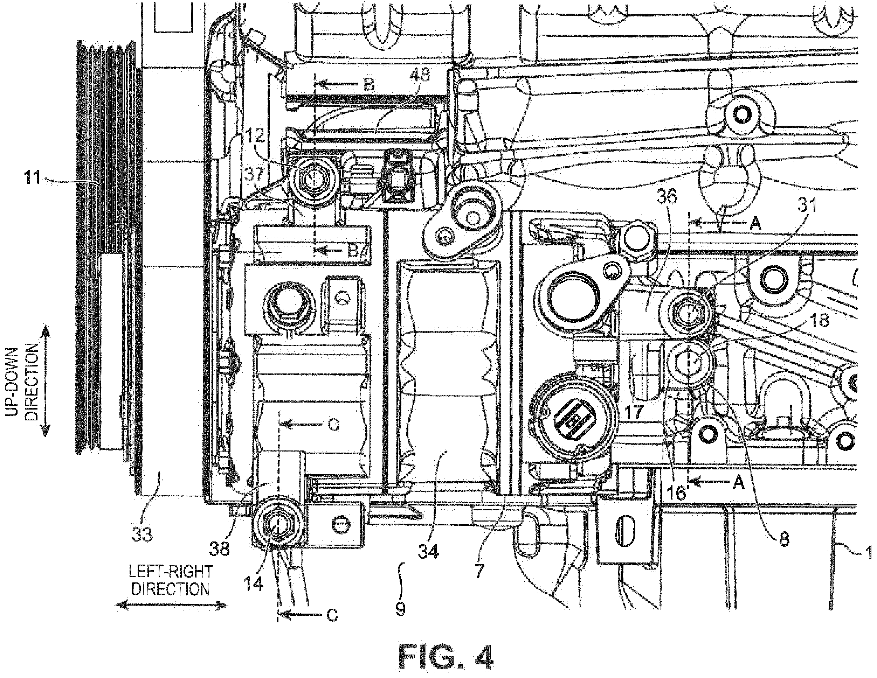

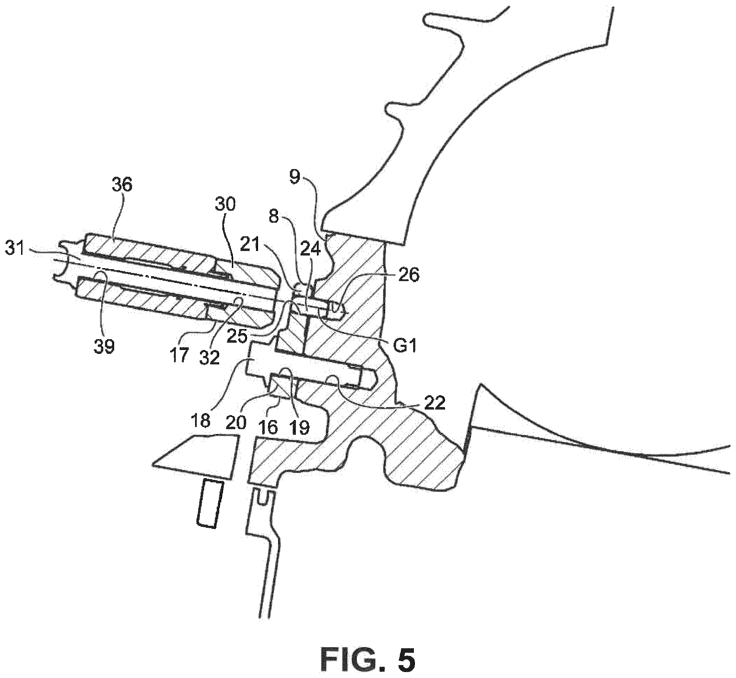

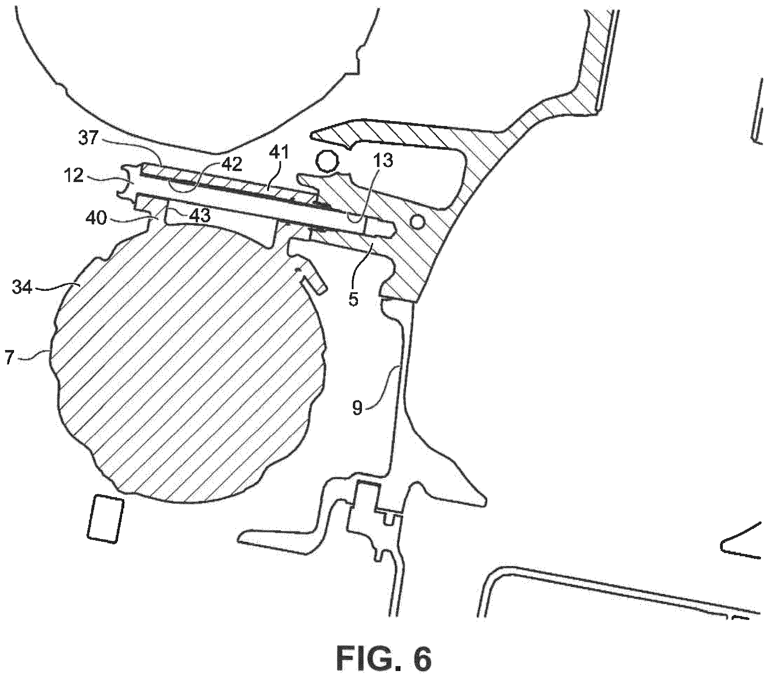

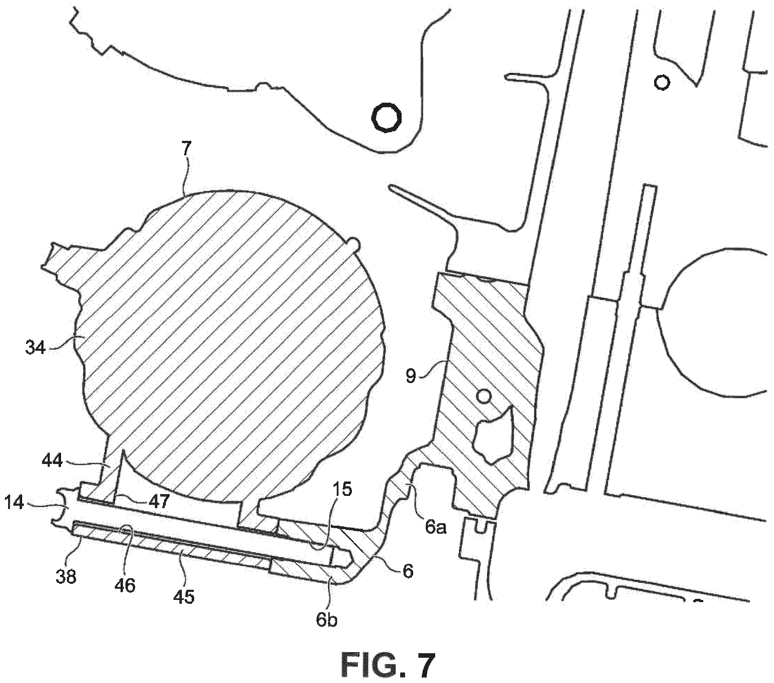

Figure 3 is a partially enlarged perspective view of the vicinity of the accessory bracket of the engine/transmission unit including the exemplary accessory mounting structure for the engine. Figure 4 is a partially enlarged front view of the vicinity of the accessory bracket of the engine/transmission unit including the exemplary accessory mounting structure for the engine. Figure 5 is a cross-sectional view taken along line A-A in Figure 4. Figure 6 is a cross-sectional view taken along line B-B in Figure 4. Figure 7 is a cross-sectional view taken along line C-C in Figure 4. The accessory 7 is described below with reference to Figures 3 to 7.

The accessory 7 is disposed in the vicinity of the crankshaft pulley 11 on a front surface portion of the cylinder block 9. The accessory 7 can be an air conditioner compressor or a power generating alternator, for example, but is not limited thereto. The accessory 7 may be any type as long as the rotary motion of the crankshaft 2 is transmitted via the driving belt 33. Specifically, the accessory 7 includes an accessory main body 34 having a hollow cylinder shape, an accessory pulley 35, which is disposed on the side surface of the accessory main body 34 on the crankshaft pulley 11 side and over which the driving belt 33 is bridged, a stationary-side mounting portion 36 that is mounted on a side of the accessory main body 34 opposite to the accessory pulley 35 and is for mounting the accessory main body 34 on the cylinder block 9, and driving-side mounting portions 37 and 38 that are mounted on the accessory pulley 35 side of the accessory main body 34 and are for mounting the accessory main body 34 on the cylinder block 9.

As illustrated in Figure 4, the stationary-side mounting portion 36 is formed in a rectangular parallelepiped shape that is long in the left-right direction, and protrudes to the right from the right side surface portion of the accessory main body 34. As illustrated in Figures 4 and 5, a circular bolt through hole 39 through which a bolt 31 is inserted passes through the right side end portion of the stationary-side mounting portion 36 in a substantially horizontal direction.

The driving-side mounting portions 37 and 38 include the upper-portion mounting portion 37 mounted on the upper-portion side of the accessory main body 34, and the lower-portion mounting portion 38 mounted on the lower-portion side of the accessory main body 34.

The upper-portion mounting portion 37 is positioned slightly on the side of a bracket 8 (the right side in Figure 4) with respect to the lower-portion mounting portion 38. As illustrated in Figure 6, the upper-portion mounting portion 37 includes a supporting portion 40 that extends upward from the accessory main body 34, and a bolt inserting portion 41. The bolt inserting portion 41 is consecutively provided on the supporting portion 40 and has a substantially rectangular parallelepiped shape that is long in a substantially horizontal direction. A bolt 12 is inserted in the bolt inserting portion 41. A circular bolt through hole 42 passes through the bolt inserting portion 41 in a substantially horizontal direction. An opening portion 43 that is long in a substantially horizontal direction is formed in a surface of the bolt inserting portion 41 that faces the accessory main body 34.

As illustrated in Figure 7, the lower-portion mounting portion 38 includes a supporting portion 44 that extends downward from the accessory main body 34, and a bolt inserting portion 45. The bolt inserting portion 45 is consecutively provided on the supporting portion 44, and has a substantially rectangular parallelepiped shape that is long in a substantially horizontal direction. A bolt 14 is inserted in the bolt inserting portion 45. A circular bolt through hole 46 passes through the bolt inserting portion 45 in a substantially horizontal direction. An opening portion 47 that is long in a substantially horizontal direction is formed in a surface of the bolt inserting portion 45 that faces the accessory main body 34.

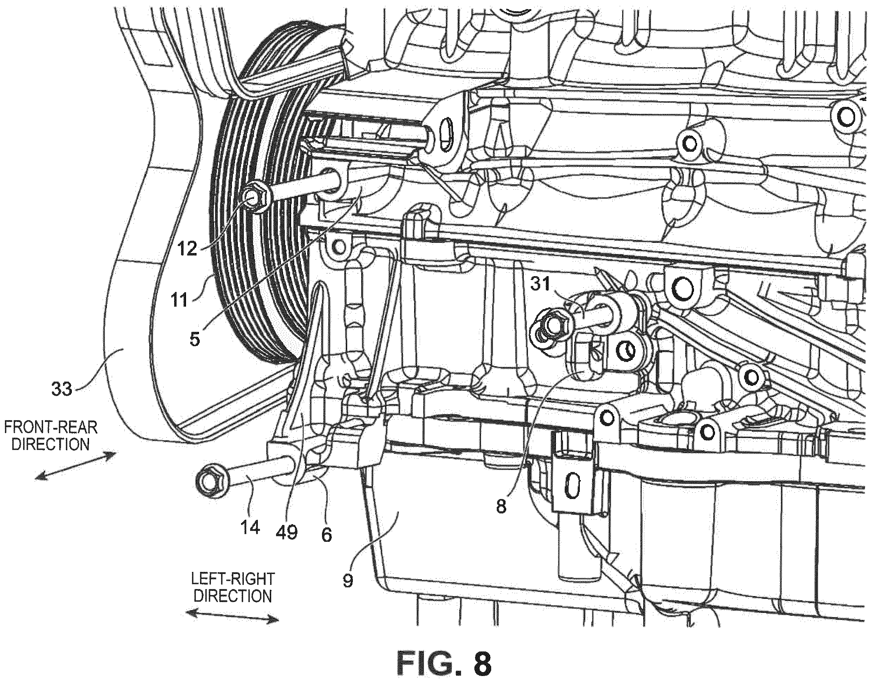

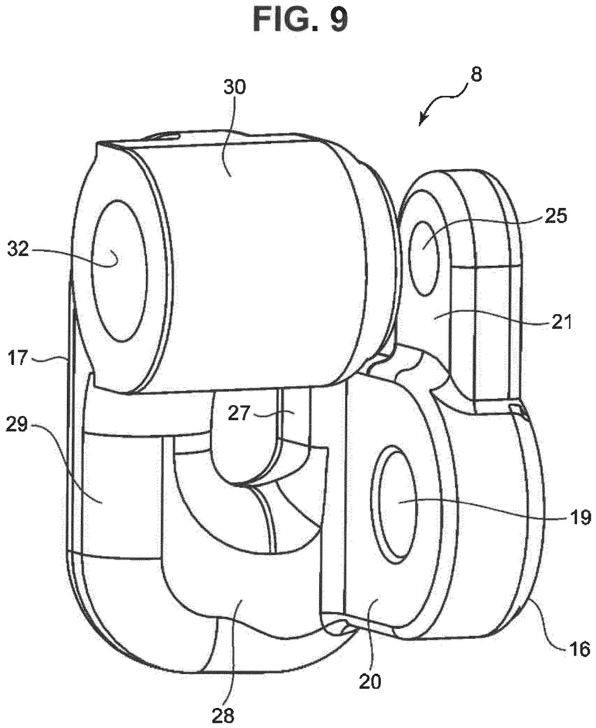

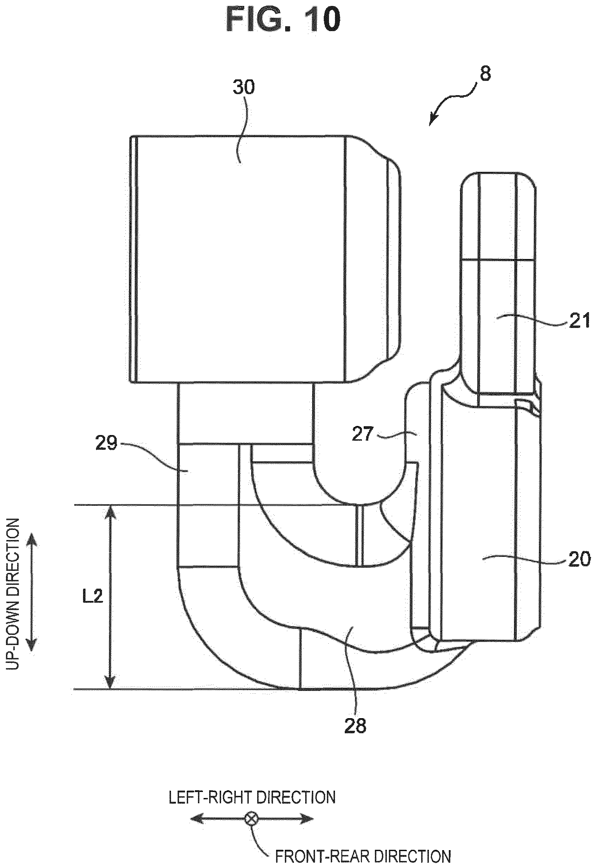

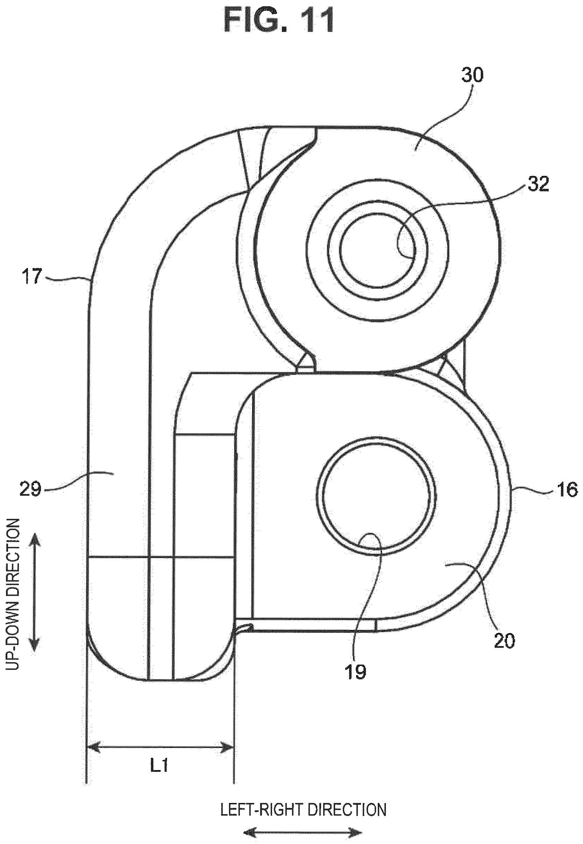

Figure 8 is another partially enlarged perspective view of the vicinity of the accessory bracket of the engine/transmission unit including the exemplary accessory mounting structure for the engine. Figure 9 is a perspective view of the bracket 8 of the exemplary accessory mounting structure for the engine. Figure 10 is a right side view of the bracket 8 of the exemplary accessory mounting structure for the engine. Figure 11 is a front view of the bracket 8 of the exemplary accessory mounting structure for the engine. Note that the accessory 7 is omitted in Figure 8 for the purpose of illustration. The accessory mounting structure for the engine is described below with reference to Figures 5 and 8 to 11.

As illustrated in Figure 8, the accessory mounting structure for the engine includes a bracket 8 disposed in a position separated to the right from an end surface (the side surface on the left side of the cylinder block 9 in Figure 8) of the cylinder block 9 that intersects with the left-right direction and is adjacent to the crankshaft pulley 11, and mounting portions 5 and 6 disposed closer to the side surface on the left side of the cylinder block 9 than the bracket 8.

The bracket 8 is mounted on the front surface portion of the cylinder block 9. Specifically, as illustrated in Figures 5 and 9, the bracket 8 includes a first portion 16 connected to the front surface portion of the cylinder block 9, and a second portion 17 connected to the accessory 7 and having a lower rigidity than the first portion 16.

The first portion 16 includes a substantially circular screw fixing portion 20 in which a bolt through hole 19 in which a bolt 18 is inserted is formed in the center, and a substantially circular positioning portion 21 that is consecutively provided on the upper side of the screw fixing portion 20 and defines the position of the first portion 16 with respect to the cylinder block 9.

As illustrated in Figure 5, in the screw fixing portion 20, the bolt 18 is inserted in a bolt through hole 22 formed in the front surface portion of the cylinder block 9 from the bolt through hole 19 in a state in which the center of the bolt through hole 22 and the center of the bolt through hole 19 in the screw fixing portion 20 match each other, and the screw fixing portion 20 is fixed to the front surface portion of the cylinder block 9 by joining a male screw of the bolt 18 and a female screw formed in the inner circumferential surface of the bolt through hole 22 to each other through screwing. Note that the bolt 18 is exemplified a fastener for fixing the bracket 8 to the engine 1. The bolt through hole 19 is exemplified as a fixing hole through which the fastener is inserted.

As illustrated in Figures 5 and 9, a pin through hole 25 in which a pin 24 is inserted is formed in the center of the positioning portion 21, and the pin 24 is press fitted in a pin through hole 26 formed in the front surface portion of the cylinder block 9 from the pin through hole 25 in a state in which the center of the pin through hole 26 and the center of the pin through hole 25 in the positioning portion 21 match each other. As a result, when the bracket 8 is mounted on the cylinder block 9, the misregistration of the first portion 16 with respect to the cylinder block 9 is reduced. Note that the pin 24 is exemplified as a positioner for positioning the bracket 8 with respect to the engine 1. The pin through hole 25 is exemplified as a positioning hole through which the positioner is inserted.

As illustrated in Figure 10, the second portion 17 has a U-shaped cross section on a virtual plane along a second direction (the left-right direction in Figure 10) defined so as to be orthogonal to the first direction (the front-rear direction in Figure 10) on a horizontal plane. Specifically, as illustrated in Figures 9 and 10, the second portion 17 includes a base portion 27 consecutively provided on the left side of the screw fixing portion 20, a bent portion 28 bent in a U-shape from the base portion 27, a straight portion 29 that extends upward in a straight manner from the bent portion 28, and an accessory connection portion 30, which is consecutively provided on the straight portion 29 and to which the accessory 7 is connected.

The straight portion 29 is formed so that a length L1 in the first direction (the left-right direction in Figure 11) is shorter than a length L2 in the vertical direction (the up-down direction in Figure 10) of the bent portion 28. As a result, when the straight portion 29 receives a force in the right direction and a force in the left direction in Figure 11 in an alternating manner, the straight portion 29 easily vibrates so as to swing in the left-right direction (the front-rear direction in Figure 10) with respect to the bent portion 28 serving as the center. In other words, the rigidity of the straight portion 29 decreases in the left-right direction in Figure 11.

As illustrated in Figures 5 and 9, the accessory connection portion 30 is formed in a cylindrical shape that extends in a substantially horizontal direction. The inner circumferential surface of the accessory connection portion 30 is a bolt through hole 32 in which the bolt 31 can be inserted, and a female screw to be screwed with a male screw of the bolt 31 is formed in the inner circumferential surface. In the accessory connection portion 30, the bolt 31 is inserted to the bolt through hole 32 from the bolt through hole 39 in the stationary-side mounting portion 36 in a state in which the center of the bolt through hole 32 and the center of the bolt through hole 39 in the stationary-side mounting portion 36 match each other in a substantially horizontal direction, and the accessory 7 is connected to the accessory connection portion 30 by joining the male screw of the bolt 31 and the female screw of the bolt through hole 32 through screwing. Note that the bolt through hole 32 penetrates in a substantially horizontal direction in Figure 5, but the cylinder block 9 side may be blocked. The accessory connection portion 30 is disposed on the straight portion 29 so that the center of the bolt through hole 32 is positioned in on an extending line of a center line G1 of the pin through hole 25 in the positioning portion 21. As a result, even when the position of the screw fixing portion 20 with respect to the cylinder block 9 is misregistered when the bracket 8 is mounted on the cylinder block 9, the positions of the positioning portion 21 and the accessory connection portion 30 with respect to the cylinder block 9 are not misregistered, and hence the misregistration of the accessory 7 to be connected to the accessory connection portion 30 is suppressed.

Next, the mounting portions 5 and 6 are described with reference to Figures 6 to 8. The mounting portions 5 and 6 include the first mounting portion 5 for the connection of the upper-portion mounting portion 37 of the accessory 7, and the second mounting portion 6 for the connection of the lower-portion mounting portion 37 of the accessory 7.

As illustrated in Figures 6 and 8, the first mounting portion 5 includes a cylindrical boss that protrudes from the front surface portion of the cylinder block 9 in a substantially horizontal direction. The inner circumferential surface of the first mounting portion 5 is a bolt through hole 13 through which the bolt 12 is inserted. In the inner surface of the bolt through hole 13, a female screw to be screwed with a male screw of the bolt 12 is formed. In the first mounting portion 5, the bolt 12 is inserted from the bolt through hole 42 to the bolt through hole 13 in a state in which the center of the bolt through hole 13 and the center of the bolt through hole 42 in the upper-portion mounting portion 37 of the accessory 7 match each other in a substantially horizontal direction, and the accessory 7 is connected to the first mounting portion 5 by joining the male screw of the bolt 12 and the female screw of the bolt through hole 13 to each other through screwing. The shape and dimension of the first mounting portion 5 is adjusted so that the rigidity of the first mounting portion 5 becomes higher than the rigidity of the second portion 17 of the bracket 8. As a result, the vibration of the accessory 7 is less likely to be generated on the accessory pulley 35 side as compared to the side to be connected to the bracket 8 of the accessory 7. Therefore, the vibration on the accessory pulley 35 side of the accessory 7 is suppressed, and the driving of the accessory 7 is stabilized.

The second mounting portion 6 includes an L-shaped boss formed on the front surface portion of the cylinder block. Specifically, as illustrated in Figure 7, the second mounting portion 6 includes a column-like extending portion 6a that extends downward from the front surface portion of the cylinder block 9 in a substantially vertical direction, and a cylindrical accessory connection portion 6b that is consecutively provided on the extending portion 6a and extends in a substantially horizontal direction and a direction (the left in Figure 7) separating from the cylinder block 9. The inner circumferential surface of the accessory connection portion 6b is a bolt through hole 15 in which the bolt 14 can be inserted, and a female screw to be screwed with a male screw of the bolt 14 is formed in the inner circumferential surface.

In the second mounting portion 6, the bolt 14 is inserted from the bolt through hole 46 in the lower-portion mounting portion 38 to the bolt through hole 15 in the accessory connection portion 6b in a state in which the center of the bolt through hole 15 in the accessory connection portion 6b and the center of the bolt through hole 46 in the lower-portion mounting portion 38 match each other in a substantially horizontal direction, and the accessory 7 is connected to the second mounting portion 6 by joining the male screw of the bolt 14 and the female screw of the bolt through hole 15 in the accessory connection portion 6b to each other through screwing. The second mounting portion 6 includes the L-shaped boss, and hence the accessory connection portion 6b easily vibrates so as to swing in the first direction (the front-rear direction in Figure 7) with respect to the extending portion 6a serving as the center. Therefore, the rigidity of the second mounting portion 6 is lower than the rigidity of the first mounting portion 5 in the first direction (the front-rear direction in Figure 7), and the vibration in the first direction (the front-rear direction in Figure 7) is more likely to be generated on the lower portion side of the accessory 7 than on the upper portion side thereof. Meanwhile, the rigidity of the first mounting portion 5 is higher than the rigidity of the second mounting portion 6, and hence the vibration is less likely to be generated on the upper-portion side of the accessory 7 than the lower-portion side thereof. Therefore, as illustrated in Figures 3 and 4, even when an accessory (not shown) over which the driving belt 33 is bridged that is different from the accessory 7 is disposed in a position 48 above the accessory 7 of the cylinder block 9, the vibration of the accessory 7 is less likely to be transmitted to the other accessory, and hence the stability of the driving of the other accessory can be secured.

As illustrated in Figure 8, a triangular rigidity adjustment portion 49 formed on the cylinder block 9 is mounted on the second mounting portion 6. As a result, the deformability (the rigidity in the left-right direction) of the second mounting portion 6 in the first direction (the left-right direction in Figure 8) is adjusted. The rigidity of the second mounting portion 6 in the left-right direction can be easily adjusted in accordance with the shape and dimension of the second mounting portion 6 and the shape and dimension of the rigidity adjustment portion 49. For example, when the sizes of the second mounting portion 6 and the rigidity adjustment portion 49 in the left-right direction are increased or the shape of the rigidity adjustment portion 49 is enlarged, the rigidity of the second mounting portion 6 in the first direction increases. Meanwhile, when the sizes of the second mounting portion 6 and the rigidity adjustment portion 49 in the left-right direction are reduced, or the shapes of the second mounting portion 6 and the rigidity adjustment portion 49 are downsized, the rigidity of the second mounting portion 6 in the left-right direction decreases.

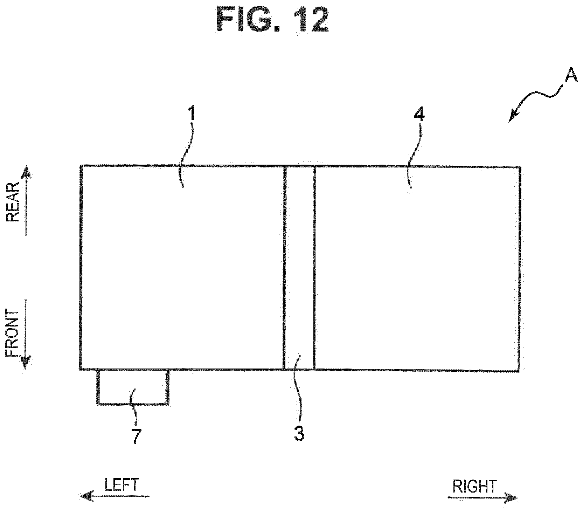

Figure 12 is a plan view of an exemplary engine/transmission unit A. The operation of reducing the engine vibration generated on the engine 1 by the accessory mounting structure for the engine is described below with reference to Figure 12. Note that, in Figure 12, the directions are described with reference to the engine 1 and not to the surface of the paper. The transmission 4 is mounted on the engine 1 via the chain cover 3 that is long in the up-down direction, and hence the engine vibration is likely to be generated in the front-rear direction of the engine 1 as illustrated in Figure 12. In other words, in the engine 1, the engine vibration is likely to be generated in the second direction (the front-rear direction in Figure 12) defined so as to be orthogonal to the first direction (the left-right direction in Figure 12) on the horizontal plane. Specifically, the engine vibration of the engine 1 in the front-rear direction refers to engine vibration in which the vibration as below is generated in the engine 1. In the vibration, the transmission 4 side (the right side in Figure 12) of the crankshaft 2 shifts to the front in the horizontal direction at the same time as the side (the left side in Figure 12) of the crankshaft 2 opposite to the transmission 4 shifts to the rear in the horizontal direction, and then the right side of the crankshaft 2 shifts to the rear in the horizontal direction at the same time as the left side of the crankshaft 2 shifts to the front in the horizontal direction. The shift as above continuously occurs in the vibration.

Meanwhile, the accessory 7 connected to the second portion 17 of the bracket 8, the first mounting portion 5, and the second mounting portion 6 vibrates so as to swing in the left-right direction with respect to the first mounting portion 5 serving as the supporting point when the accessory 7 receives a force in the right direction and a force in the left direction in an alternating manner because the rigidity of the first mounting portion 5 is high and the rigidity of the second portion 17 of the bracket 8 and the second mounting portion 6 in the first direction (the left-right direction in Figure 12) is low. In other words, the accessory 7 vibrates in the left-right direction when the engine vibration of the engine 1 in the front-rear direction is generated. The engine vibration of the engine 1 in the front-rear direction is reduced by the vibration of the accessory 7 in the left-right direction.

Specifically, first, the right side of the engine 1 shifts to the front in the horizontal direction at the same time as the left side of the engine 1 shifts to the rear in the horizontal direction. At this time, the accessory 7 receives a force in the left direction by the shift of the engine 1. The accessory 7 that has received a force in the left direction stays on the spot for a moment and shifts to the left in accordance with the law of inertia.

Then, the right side of the engine 1 shifts to the rear in the horizontal direction at the same time as the left side of the engine 1 shifts to the front in the horizontal direction. At this time, the accessory 7 that has received the force in the left direction continuously shifts to the left for a moment in accordance with the law of inertia at the same time as the accessory 7 receives a force in the right direction from the engine 1. Meanwhile, the left side of the engine 1 receives a force toward the rear in the horizontal direction by the shift of the accessory 7 to the left, and hence the shift of the left side of the engine 1 to the front in the horizontal direction is suppressed. Then, the accessory 7 that has been received the force in the right direction by the displacement of the left side of the engine 1 to the front in the horizontal direction shifts to the right.

Next, the right side of the engine 1 shifts to the front in the horizontal direction at the same time as the left side of the engine 1 shifts to the rear in the horizontal direction. At this time, the accessory 7 that has received the force in the right direction continuously shifts to the right for a moment in accordance with the law of inertia at the same time as the accessory 7 receives a force in the left direction from the engine 1. Meanwhile, the right side of the engine 1 receives a force toward the rear in the horizontal direction by the shift of the accessory 7 to the right shift, and hence the shift of the right side of the engine 1 to the front in the horizontal direction is suppressed.

As described above, the accessory 7 connected to the second portion 17 and the second mounting portion 6 vibrates in the left-right direction in the opposite phase to the engine vibration of the engine 1 in the front-rear direction, and hence the engine vibration of the engine 1 in the front-rear direction is reduced by the vibration of the accessory 7 in the left-right direction. In other words, the second portion 17 and the second mounting portion 6 function as dynamic dampers that attenuate the engine vibration of the engine 1 in the front-rear direction by vibrating in the left-right direction.

Note that the accessory mounting structure for the engine described above is one embodiment of the invention, and specific configurations thereof can be changed, as appropriate. Modifications of this embodiment are described below.

In the abovementioned embodiment, the accessory pulley 35 side of the accessory 7 is mounted on the cylinder block 9 via the mounting portions 5 and 6 formed on the engine 1, but at least one of the mounting portions 5 and 6 may be omitted and the accessory pulley 35 side of the accessory 7 may be directly mounted on the cylinder block 9. As a result, the weight and the cost of the engine 1 can be reduced.

In the abovementioned embodiment, the second portion 17 of the bracket 8 has a cross section formed in a U-shape on a virtual plane along the left-right direction in Figure 10, but may be formed in an inverted U-shape or an L-shape on a virtual plane along the left-right direction in Figure 10. However, the second portion 17 is preferred to be formed in a U-shape or an inverted U-shape because stress concentration can be avoided when the second portion 17 vibrates in the front-rear direction in Figure 10.

In the abovementioned embodiment, the second mounting portion 6 including the L-shaped boss is formed on the front surface portion of the cylinder block 9, but the first mounting portion 5 may be formed instead of the second mounting portion 6. As a result, the rigidity of the first mounting portion 5 is higher than the rigidity of the second mounting portion 6, and hence it is preferred because vibration is less likely to be generated on the accessory pulley 35 side of the accessory 7 and the driving of the accessory 7 is stabilized more.

In the abovementioned embodiment, the extending portion 6a of the second mounting portion 6 is formed so as to extend downward in the vertical direction, but may be formed so as to extend upward in the vertical direction.

In the abovementioned embodiment, only the accessory 7 is connected to the bracket 8 and the mounting portions 5 and 6, but a plurality of accessories may be connected.

The exemplary accessory mounting structure for the engine described in relation to the abovementioned embodiment mainly has the following features.

The accessory mounting structure for the engine according to one aspect of the abovementioned embodiment includes a crankshaft that extends in a first direction. The engine supports an accessory via a bracket. The bracket includes: a first portion connected to the engine; and a second portion connected to the accessory and having a lower rigidity than the first portion. The second portion functions as a dynamic damper that attenuates vibration of the engine by vibrating in an opposite phase to the vibration of the engine and in the first direction when the engine vibrates in a second direction orthogonal to the first direction on a horizontal plane.

According to the abovementioned configuration, the second portion functions as a dynamic damper that attenuates vibration of the engine by vibrating in an opposite phase to the vibration of the engine and in the first direction when the engine vibrates in the second direction orthogonal to the first direction on a horizontal plane. As described above, the vibration of the engine is attenuated by the vibration of the second portion of the bracket in the first direction, and hence the reinforcement for suppressing the vibration of the engine is unnecessary. Therefore, the vibration of the engine in the direction orthogonal to the direction in which the crankshaft of the engine extends on a horizontal plane can be reduced without causing an increase in the weight and the cost.

In the abovementioned configuration, a mounting portion connected to the at least one accessory in a position separated from the bracket in the first direction may be further included. The engine may include an end surface that intersects with the first direction and is adjacent to a rotating member that rotates together with the crankshaft in a place outside the engine. The mounting portion may be disposed so as to be closer to the end surface than the bracket. The second portion of the bracket may have a lower rigidity than the mounting portion.

According to the abovementioned configuration, the second portion of the bracket has a lower rigidity than the mounting portion disposed closer to the end surface than the bracket, and hence the mounting portion has a higher rigidity than the second portion of the bracket. Therefore, vibration is less likely to be generated on the end surface side of the accessory as compared to the side of the accessory connected to the bracket, and hence the stability of the driving of the accessory is easily secured.

In the abovementioned configuration, the second portion of the bracket may have a length in the first direction that is shorter than a length in a vertical direction.

According to the abovementioned configuration, the second portion of the bracket has a length in the first direction that is shorter than a length in the vertical direction, and hence is easily deformed in the first direction. In other words, the rigidity of the second portion is low in the first direction. Therefore, the second portion of the bracket easily vibrates in the first direction, and hence the engine vibration is reduced by the vibration of the second portion in the first direction in a more effective manner.

In the abovementioned configuration, the second portion of the bracket may have a U-shaped or inverted U-shaped cross section on a virtual plane along the second direction.

According to the abovementioned configuration, the second portion of the bracket has a U-shaped or inverted U-shaped cross section on a virtual plane along the second direction, and hence easily vibrates in the first direction by the shape of the U-shape or the inverted U-shape. In other words, the rigidity of the second portion decreases. Therefore, the engine vibration in the second direction is reduced by the vibration of the second portion in the first direction in a more effective manner.

In the abovementioned configuration, a fixing hole through which a fastener for fixing the bracket to the engine is inserted and a positioning hole through which a positioner for positioning the bracket with respect to the engine is inserted may be formed in the first portion. The second portion may include an accessory connection portion to which the at least one accessory is connected on an extending line of a center line of the positioning hole.

According to the abovementioned configuration, the second portion includes the accessory connection portion to which the at least one accessory is connected on an extending line of the center line of the positioning hole, and hence the positions of the positioning hole and the accessory connection portion with respect to the engine are not misregistered even when the position of the fixing hole with respect to the engine is misregistered when bracket is fixed to the engine. Therefore, the misregistration of the accessory with respect to the engine is suppressed.

In the abovementioned configuration, an accessory different from the accessory of the engine may be disposed above the accessory. The mounting portion may include: a first mounting portion for connecting the at least one accessory to the engine; and a second mounting portion for connecting the at least one accessory to the engine at a place below the first mounting portion. The second mounting portion may have a lower rigidity than the first mounting portion.

According to the abovementioned configuration, the second mounting portion has a lower rigidity than the first mounting portion, and hence the first mounting portion has a higher rigidity than the second mounting portion. Therefore, the vibration is less likely to be generated on the upper-portion side of the accessory, and the vibration of the accessory is less likely to be transmitted to the other accessory. Therefore, the stability of the driving of the other accessory can be secured and the rigidity of the second mounting portion can be reduced.

In the abovementioned configuration, the second mounting portion may include an L-shaped boss formed on a cylinder block of the engine.

According to the abovementioned configuration, the second mounting portion includes the L-shaped boss formed on the cylinder block of the engine, and hence the deformability in the first direction (the rigidity in the first direction) can be easily adjusted by changing the shape of the L-shape.

An accessory mounting structure for an engine according to one aspect of the invention includes a crankshaft that extends in a first direction. The engine supports an accessory via a bracket. The bracket includes: a first portion arranged on one side of the engine in the first direction and connected to the engine; and a second portion connected to the accessory and having a lower rigidity in the first direction than the first portion.

According to the abovementioned configuration, the bracket includes: a first portion arranged on one side of the engine in the first direction and connected to the engine; and a second portion connected to the accessory and having a lower rigidity in the first direction than the first portion. Therefore, when the engine vibrates in the second direction orthogonal to the first direction on a horizontal plane, the second portion vibrates in an opposite phase to the vibration of the engine and in the first direction. As a result, the second portion functions as a dynamic damper that attenuates the vibration of the engine.

### Industrial Applicability

The principle of the abovementioned embodiment can be applied to accessory mounting structures for various engines such as a reciprocating engine.

## Claims

1. An engine (1) comprising an accessory mounting structure, the engine (1) comprising a crankshaft (2) that extends in a first direction on an horizontal plane, wherein:
the engine (1) supports an accessory (7) via a bracket (8);
the bracket (8) includes:
a first portion (16) connected to the engine (1); and
a second portion (17) connected to the accessory (7) and having a lower rigidity than the first portion (16), wherein
the second portion (17) functions as a dynamic damper that attenuates vibration of the engine (1) by vibrating in an opposite phase to the vibration of the engine (1) and in the first direction when the engine (1) vibrates in a second direction orthogonal to the first direction on the horizontal plane;
wherein a fixing hole (19) through which a fastener for fixing the bracket (8) to the engine (1) is inserted and a positioning hole (25) through which a positioner for positioning the bracket (8) with respect to the engine (1) is inserted are formed in the first portion (16); and
the second portion (17) includes an accessory connection portion (30) to which the at least one accessory (7) is connected on an extending line of a center line (G1) of the positioning hole (25).

2. The engine (1) according to claim 1, further comprising a mounting portion (5, 6) connected to the at least one accessory (7) in a position separated from the bracket (8) in the first direction, wherein:
the engine (1) includes an end surface that intersects with the first direction and is adjacent to a rotating member (11) that rotates together with the crankshaft (2) in a place outside the engine (1);
the mounting portion (5, 6) is disposed so as to be closer to the end surface than the bracket (8); and
the second portion (17) of the bracket (8) has a lower rigidity than the mounting portion (5, 6).

3. The engine (1) according to any one of the preceding claims, wherein the second portion (17) of the bracket (8) has a length in the first direction that is shorter than a length in a vertical direction.

4. The engine (1) according to claim 3, wherein the second portion (17) of the bracket (8) has a U-shaped or inverted U-shaped cross section on a virtual plane along the second direction.

5. The engine (1) according to claim 2, wherein:
the accessory (7) is a first accessory (7), and wherein a second accessory different from the first accessory (7) of the engine (1) is disposed above the first accessory (7);
the mounting portion (5, 6) includes:
a first mounting portion (5) for connecting the at least one first accessory (7) to the engine (1); and
a second mounting portion (6) for connecting the at least one first accessory (7) to the engine (1) at a place below the first mounting portion (5); and
the second mounting portion (6) has a lower rigidity than the first mounting portion (5).

6. The engine (1) according to claim 5, wherein the second mounting portion (6) includes an L-shaped boss formed on a cylinder block of the engine (1).

## Patentansprüche

1. Motor (1), umfassend eine Zubehörmontagestruktur, wobei der Motor (1) eine Kurbelwelle (2) umfasst, die sich in einer ersten Richtung auf einer horizontalen Ebene erstreckt, wobei:
der Motor (1) ein Zubehör (7) über eine Halterung (8) stützt bzw. trägt;
wobei die Halterung (8) enthält:
einen ersten Abschnitt (16), der mit dem Motor (1) verbunden ist; und
einen zweiten Abschnitt (17), der mit dem Zubehör (7) verbunden ist und
eine geringere Steifigkeit als der erste Abschnitt (16) aufweist, wobei der zweite Abschnitt (17) als ein dynamischer Dämpfer fungiert, der eine Vibration des Motors (1) dämpft, indem er in einer entgegengesetzten Phase zu der Vibration des Motors (1) und in der ersten Richtung vibriert, wenn der Motor (1) in einer zweiten Richtung orthogonal zu der ersten Richtung auf der horizontalen Ebene vibriert;
wobei ein Fixierungsloch (19), durch das ein Befestiger zum Fixieren der Halterung (8) an dem Motor (1) eingesetzt ist, und ein Positionierungsloch (25), durch das ein Positionierer zum Positionieren der Halterung (8) in Bezug auf den Motor (1) eingesetzt ist, in dem ersten Abschnitt (16) ausgebildet sind; und
der zweite Abschnitt (17) einen Zubehörverbindungsabschnitt (30) enthält, mit dem das zumindest eine Zubehör (7) an einer Erstreckungs- bzw. Verlängerungslinie einer Mittellinie (G1) des Positionierungslochs (25) verbunden ist.

2. Motor (1) nach Anspruch 1, ferner umfassend einen Montageabschnitt (5, 6), der mit dem zumindest einen Zubehör (7) in einer Position verbunden ist, die von der Halterung (8) in der ersten Richtung getrennt ist, wobei:
der Motor (1) eine Endfläche bzw. -oberfläche enthält, die sich mit der ersten Richtung schneidet und angrenzend an bzw. benachbart zu einem rotierenden Glied (11) ist, das sich zusammen mit der Kurbelwelle (2) an einer Stelle außerhalb des Motors (1) dreht;
der Montageabschnitt (5, 6) so angeordnet ist, dass er näher an der Endfläche als die Halterung (8) ist; und
der zweite Abschnitt (17) der Halterung (8) eine geringere Steifigkeit als der Montageabschnitt (5, 6) aufweist.

3. Motor (1) nach einem der vorhergehenden Ansprüche, wobei der zweite Abschnitt (17) der Halterung (8) eine Länge in der ersten Richtung aufweist, die kürzer ist als eine Länge in einer vertikalen Richtung.

4. Motor (1) nach Anspruch 3, wobei der zweite Abschnitt (17) der Halterung (8) einen U-förmigen oder invertierten U-förmigen Querschnitt in einer virtuellen Ebene entlang der zweiten Richtung aufweist.

5. Motor (1) nach Anspruch 2, wobei:
das Zubehör (7) ein erstes Zubehör (7) ist, und wobei ein zweites Zubehör, das sich von dem ersten Zubehör (7) des Motors (1) unterscheidet, über dem ersten Zubehör (7) angeordnet ist;
der Montageabschnitt (5, 6) enthält:
einen ersten Montageabschnitt (5) zum Verbinden des zumindest einen ersten Zubehörs (7) mit dem Motor (1); und
einen zweiten Montageabschnitt (6) zum Verbinden des zumindest einen ersten Zubehörs (7) mit dem Motor (1) an einer Stelle unterhalb des ersten Montageabschnitts (5); und
der zweite Montageabschnitt (6) eine geringere Steifigkeit aufweist als der erste Montageabschnitt (5).

6. Motor (1) nach Anspruch 5, wobei der zweite Montageabschnitt (6) einen L-förmigen Vorsprung aufweist, der an einem Zylinderblock des Motors (1) ausgebildet ist.

## Revendications

1. Moteur (1) comprenant une structure de montage d'accessoire, le moteur (1) comprenant un vilebrequin (2) qui s'étend dans une première direction sur un plan horizontal, dans lequel :
le moteur (1) supporte un accessoire (7) par le biais d'un support (8) ;
le support (8) inclut :
une première portion (16) connectée au moteur (1) ; et
une seconde portion (17) connectée à l'accessoire (7) et ayant une rigidité inférieure à la première portion (16), dans lequel
la seconde portion (17) fonctionne en tant qu'amortisseur dynamique qui atténue la vibration du moteur (1) en vibrant dans une phase opposée à la vibration du moteur (1) et dans la première direction lorsque le moteur (1) vibre dans une seconde direction orthogonale à la première direction sur le plan horizontal ; dans lequel un orifice de fixation (19) à travers lequel un dispositif de fixation pour fixer le support (8) au moteur (1) est inséré et un orifice de positionnement (25) à travers lequel un dispositif de positionnement pour positionner le support (8) par rapport au moteur (1) est inséré sont formés dans la première portion (16) ; et
la seconde portion (17) inclut une portion de connexion d'accessoire (30) à laquelle l'au moins un accessoire (7) est connecté sur une ligne de prolongement d'une ligne centrale (G1) de l'orifice de positionnement (25).

2. Moteur (1) selon la revendication 1, comprenant en outre une portion de montage (5, 6) connectée à l'au moins un accessoire (7) dans une position séparée du support (8) dans la première direction, dans lequel :
le moteur (1) inclut une surface d'extrémité qui coupe la première direction et est adjacente à un élément rotatif (11) qui tourne avec le vilebrequin (2) à un endroit en dehors du moteur (1) ;
la portion de montage (5, 6) est disposée de manière à être plus proche de la surface d'extrémité que le support (8) ; et
la seconde portion (17) du support (8) a une rigidité inférieure à la portion de montage (5, 6).

3. Moteur (1) selon l'une quelconque des revendications précédentes, dans lequel la seconde portion (17) du support (8) a une longueur dans la première direction qui est plus courte qu'une longueur dans une direction verticale.

4. Moteur (1) selon la revendication 3, dans lequel la seconde portion (17) du support (8) a une section transversale en forme de U ou en forme de U inversé sur un plan virtuel le long de la seconde direction.

5. Moteur (1) selon la revendication 2, dans lequel :
l'accessoire (7) est un premier accessoire (7), et dans lequel un second accessoire différent du premier accessoire (7) du moteur (1) est disposé au-dessus du premier accessoire (7) ;
la portion de montage (5, 6) inclut :
une première portion de montage (5) pour connecter l'au moins un premier accessoire (7) au moteur (1) ; et
une seconde portion de montage (6) pour connecter l'au moins un premier accessoire (7) au moteur (1) à un endroit en dessous de la première portion de montage (5) ; et
la seconde portion de montage (6) a une rigidité inférieure à la première portion de montage (5).

6. Moteur (1) selon la revendication 5, dans lequel la seconde portion de montage (6) inclut un bossage en forme de L formé sur un bloc-cylindres du moteur (1).
